# EUROPEAN PATENT APPLICATION

(11) **EP 4 770 004 A1**
(43) Date of publication of application: **01.07.2026**
(21) Application number: 24855660.7
(22) Date of filing: 13.08.2024
(51) Int. Cl.: H04L 9/08, G06F 21/60

(54) **SERVICE PROCESSING**

(30) Priority: 23.08.2023 CN 202311070349
(71) Applicant: Alipay (Hangzhou) Digital Service Technology Co., Ltd., Hangzhou, Zhejiang 310000 (CN)
(72) Inventor: LIU, Yujia, Hangzhou, Zhejiang 310000 (CN); HUANG, Lin, Hangzhou, Zhejiang 310000 (CN); ZHANG, Wanqiao, Hangzhou, Zhejiang 310000 (CN); WANG, Wenshuo, Hangzhou, Zhejiang 310000 (CN); DONG, Shuaike, Hangzhou, Zhejiang 310000 (CN); HU, Shuwei, Hangzhou, Zhejiang 310000 (CN)
(74) Representative: Winter, Brandl - Partnerschaft mbB
(86) International application number: PCT/CN2024/111760
(87) International publication number: WO 2025/039934

(57) **Abstract**

This specification discloses a service processing method and apparatus, a storage medium, and an electronic device. The service processing method includes: sending, by a target terminal device, a service request to a server, to cause the server to encrypt target data by using a prestored public key and send encrypted data to the target terminal device and at least some terminal devices in a service binding relationship with the target terminal device, where the public key is generated from private keys delivered by the server to terminal devices; decrypting the encrypted data by using a locally stored private key after obtaining the encrypted data, to obtain a decrypted data shard, and receiving decrypted data shards sent by the at least some terminal devices; judging whether a quantity of obtained different decrypted data shards is less than a preset quantity threshold; and if the quantity of the obtained different decrypted data shards is not less than the preset quantity threshold, determining the target data according to the obtained decrypted data shards, and performing service processing according to the target data.

## Description

### TECHNICAL FIELD

This specification relates to the field of Internet technologies, and in particular, to a service processing method and apparatus, a storage medium, and an electronic device.

### BACKGROUND

With the rapid development of Internet technologies, users are facing increasing challenges in protecting their privacy and property security when executing services such as financial transactions and wealth management. The public-private key mechanism ensures security of data transmission by encrypting and decrypting data separately during data transmission.

However, since manners, such as a trusted execution environment, require high software and hardware configurations and are not suitable for all devices, private keys are usually written in code of terminal devices. This manner provides low protection for private keys. The private keys stored in the terminal devices are prone to leakage by malicious users, resulting in low security during data transmission, damaging privacy and property security of users.

Therefore, how to effectively prevent risks caused by private key leakage and further ensure privacy and property security of users is a problem to be urgently resolved.

### SUMMARY

This specification provides a service processing method and apparatus, a storage medium, and an electronic device. A risk caused by private key leakage in a single terminal device is avoided by allocating private keys to different terminal devices.

The following technical solutions are used in this specification.

This specification provides a service processing method, including: sending, by a target terminal device, a service request to a server, to cause the server to determine target data according to the service request and encrypt the target data by using a prestored public key, to send encrypted data obtained through encryption to the target terminal device and at least some terminal devices in a service binding relationship with the target terminal device, where the public key is generated from private keys delivered by the server to the target terminal device and the terminal devices in a service binding relationship with the target terminal device; decrypting the encrypted data by using a locally stored private key after obtaining the encrypted data, to obtain a decrypted data shard, and receiving decrypted data shards sent by the at least some terminal devices, where the decrypted data shards sent by the at least some terminal devices are obtained by the at least some terminal devices after decrypting the encrypted data by using locally stored private keys; judging whether a quantity of obtained different decrypted data shards is less than a preset quantity threshold; and if the quantity of the obtained different decrypted data shards is not less than the preset quantity threshold, determining the target data according to the obtained decrypted data shards, and performing service processing according to the target data.

Optionally, device types and/or manufacturers of the target terminal device and the at least some terminal devices in a service binding relationship with the target terminal device are not completely the same.

Optionally, the sending, by the target terminal device, a service request to a server, to cause the server to determine target data according to the service request specifically includes: obtaining, by the target terminal device, service data in response to a specified service operation; encrypting the service data by using the locally stored private key, to obtain encrypted service data, and sending the service data to the terminal devices in a service binding relationship with the target terminal device, to cause the terminal devices in a service binding relationship with the target terminal device to encrypt the service data by using the locally stored private keys; and generating a service request carrying the encrypted service data, and sending the service request to the server, to cause the server to determine the service data according to the encrypted service data sent by the target terminal device and encrypted service data sent by the terminal devices in a service binding relationship with the target terminal device and determine the target data according to the service data.

This specification provides a service processing method. The method is applied to a server, and includes: receiving a service request sent by a target terminal device; determining target data according to the service request, and encrypting the target data by using a prestored public key, to obtain encrypted data; and sending the encrypted data to the target terminal device and at least some terminal devices in a service binding relationship with the target terminal device, to cause the target terminal device to decrypt the encrypted data by using a locally stored private key, to obtain a decrypted data shard, receiving decrypted data shards sent by the at least some terminal devices, determining the target data according to the obtained decrypted data shards when it is determined that a quantity of obtained different decrypted data shards is not less than a preset quantity threshold, and performing service processing according to the target data, where the decrypted data shards sent by the at least some terminal devices are obtained by the at least some terminal devices after decrypting the encrypted data by using locally stored private keys, and the public key is generated from private keys delivered by the server to the target terminal device and the terminal devices in a service binding relationship with the target terminal device.

Optionally, the receiving a service request sent by a target terminal device specifically includes: receiving a service request carrying encrypted service data sent by the target terminal device, and receiving encrypted service data sent by the terminal devices in a service binding relationship with the target terminal device, where the encrypted service data carried in the service request is obtained by the target terminal device encrypting the service data by using the locally stored private key, and the encrypted service data sent by the terminal devices in a service binding relationship with the target terminal device is obtained by the terminal devices in a service binding relationship with the target terminal device encrypting the service data by using the locally stored private keys, the service data in the target terminal device is obtained by the target terminal device in response to a specified service operation, and service data in the terminal devices in a service binding relationship with the target terminal device is sent by the target terminal device; judging whether a quantity of obtained different encrypted service data is less than a preset quantity threshold; and if the quantity of the obtained different encrypted service data is not less than the preset quantity threshold, determining the service data according to the obtained encrypted service data, and determining the target data according to the service data.

This specification provides a service processing apparatus, including: a sending module, configured to send a service request to a server, to cause the server to determine target data according to the service request and encrypt the target data by using a prestored public key, to send encrypted data obtained through encryption to the target terminal device and at least some terminal devices in a service binding relationship with the target terminal device, where the public key is generated from private keys delivered by the server to the target terminal device and the terminal devices in a service binding relationship with the target terminal device; a decrypting module, configured to decrypt the encrypted data by using a locally stored private key after obtaining the encrypted data, to obtain a decrypted data shard, and receive decrypted data shards sent by the at least some terminal devices, where the decrypted data shards sent by the at least some terminal devices are obtained by the at least some terminal devices after decrypting the encrypted data by using locally stored private keys; a judging module, configured to judge whether a quantity of obtained different decrypted data shards is less than a preset quantity threshold; and a determining module, configured to determine, if the quantity of the obtained different decrypted data shards is not less than the preset quantity threshold, the target data according to the obtained decrypted data shards, and perform service processing according to the target data.

Optionally, device types and/or manufacturers of the target terminal device and the at least some terminal devices in a service binding relationship with the target terminal device are not completely the same.

Optionally, the sending module is specifically configured to: obtain service data in response to a specified service operation; encrypt the service data by using the locally stored private key, to obtain encrypted service data, and send the service data to the terminal devices in a service binding relationship with the target terminal device, to cause the terminal devices in a service binding relationship with the target terminal device to encrypt the service data by using the locally stored private keys; and generate a service request carrying the encrypted service data, and send the service request to the server, to cause the server to determine the service data according to the encrypted service data sent by the target terminal device and encrypted service data sent by the terminal devices in a service binding relationship with the target terminal device and determine the target data according to the service data.

This specification provides a service processing apparatus, including: a receiving module, configured to receive a service request sent by a target terminal device; an encrypting module, configured to determine target data according to the service request, and encrypt the target data by using a prestored public key, to obtain encrypted data; and a sending module, configured to: send the encrypted data to the target terminal device and at least some terminal devices in a service binding relationship with the target terminal device, to cause the target terminal device to decrypt the encrypted data by using a locally stored private key, to obtain a decrypted data shard, receive decrypted data shards sent by the at least some terminal devices, determine the target data according to the obtained decrypted data shards when it is determined that a quantity of obtained different decrypted data shards is not less than a preset quantity threshold, and perform service processing according to the target data, where the decrypted data shards sent by the at least some terminal devices are obtained by the at least some terminal devices after decrypting the encrypted data by using locally stored private keys, and the public key is generated from private keys delivered by the server to the target terminal device and the terminal devices in a service binding relationship with the target terminal device.

Optionally, the receiving module is specifically configured to: receive a service request carrying encrypted service data sent by the target terminal device, and receive encrypted service data sent by the terminal devices in a service binding relationship with the target terminal device, where the encrypted service data carried in the service request is obtained by the target terminal device encrypting the service data by using the locally stored private key, and the encrypted service data sent by the terminal devices in a service binding relationship with the target terminal device is obtained by the terminal devices in a service binding relationship with the target terminal device encrypting the service data by using the locally stored private keys, the service data in the target terminal device is obtained by the target terminal device in response to a specified service operation, and service data in the terminal devices in a service binding relationship with the target terminal device is sent by the target terminal device; judge whether a quantity of obtained different encrypted service data is less than a preset quantity threshold; and if the quantity of the obtained different encrypted service data is not less than the preset quantity threshold, determine the service data according to the obtained encrypted service data, and determine the target data according to the service data.

This specification provides a computer-readable storage medium, storing a computer program, where the computer program, when executed by a processor, implements the foregoing service processing method.

This specification provides an electronic device, including a memory, a processor, and a computer program stored in the memory and executable on the processor, where the processor, when executing the program, implements the foregoing service processing method.

At least one of the foregoing technical solutions used in this specification can achieve the following beneficial effects.

In the service processing method provided in this specification, a target terminal device sends a service request to a server, to cause the server to encrypt target data by using a prestored public key and send encrypted data to the target terminal device and at least some terminal devices in a service binding relationship with the target terminal device, where the public key is generated from private keys delivered by the server to the terminal devices; decrypts the encrypted data by using a locally stored private key after obtaining the encrypted data, to obtain a decrypted data shard, and receives decrypted data shards sent by the at least some terminal devices; judges whether a quantity of obtained different decrypted data shards is less than a preset quantity threshold; and if the quantity of the obtained different decrypted data shards is not less than the preset quantity threshold, determines the target data according to the obtained decrypted data shards, and performs service processing according to the target data.

It can be seen from the foregoing method that, in this solution, a server may simultaneously send encrypted data to a plurality of terminal devices, and the terminal devices respectively decrypt the encrypted data by using locally stored private keys, and send decrypted data shards to a target terminal device, so that the target terminal device obtains target data. Compared with an existing method in which a private key is stored in one terminal device, in this solution, private keys may be respectively stored in a plurality of terminal devices. In this way, even if a private key in one terminal device is leaked, original data cannot be decrypted based on the private key, thereby effectively preventing a risk caused by private key leakage, and further ensuring privacy and property security of users.

### BRIEF DESCRIPTION OF THE DRAWINGS

The accompanying drawings described herein are used to provide further understanding of this specification, and form a part of this specification. Exemplary embodiments of this specification and descriptions thereof are used to explain this specification, and do not constitute any inappropriate limitation to this specification.
FIG. 1 is a schematic flowchart of a service processing method according to this specification;
FIG. 2 is a schematic diagram of a signature verification process according to this specification;
FIG. 3 is a schematic diagram of a decryption process by using a private key according to this specification;
FIG. 4 is a schematic flowchart of a service processing method according to this specification;
FIG. 5 is a schematic diagram of a service processing apparatus according to this specification;
FIG. 6 is a schematic diagram of a service processing apparatus according to this specification; and
FIG. 7 is a schematic diagram of an electronic device corresponding to FIG. 1 or FIG. 4 according to this specification.

### DETAILED DESCRIPTION

To make the objectives, technical solutions, and advantages of this specification clearer, the technical solutions of this specification are clearly and completely described below with reference to specific embodiments of this specification and corresponding accompanying drawings. Apparently, the described embodiments are only some but not all of the embodiments of this specification. All other embodiments obtained by a person of ordinary skill in the art based on the embodiments in this specification without creative efforts fall within the protection scope of this specification.

Technical solutions provided in various embodiments of this specification are described in detail below with reference to accompanying drawings.

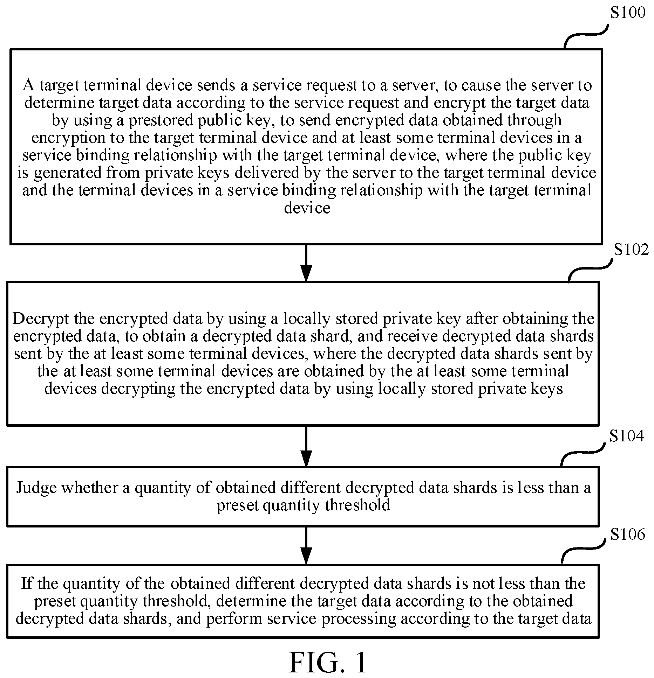

FIG. 1 is a schematic flowchart of a service processing method according to this specification, including the following steps.

S100: A target terminal device sends a service request to a server, to cause the server to determine target data according to the service request and encrypt the target data by using a prestored public key, to send encrypted data obtained through encryption to the target terminal device and at least some terminal devices in a service binding relationship with the target terminal device, where the public key is generated from private keys delivered by the server to the target terminal device and the terminal devices in a service binding relationship with the target terminal device.

In a public-private key system, protecting a private key is always a major security challenge. Currently, protection of key and data on a terminal device has become a basic requirement, but existing key protection solutions generally rely on adaptation based on software and hardware environments, including a trusted execution environment (TEE), a security engine (SE) chip, and the like. Reliance on the software and hardware environments increases deployment costs and raises the barrier to entry for developers. Consequently, a large number of developers tend to hardcode private keys in code, causing security risks.

Based on this, this specification provides a service processing method. Encrypted data is decrypted by using private keys locally stored in a plurality of terminal devices in a service binding relationship, and decrypted data shards are shared with a target terminal device, so that the target terminal device aggregates and decrypts the decrypted data shards when a quantity of received decrypted data shards satisfies a requirement, to obtain original target data.

In this specification, a user may perform, on a server in advance, service binding on a plurality of terminal devices. To prevent a malicious user from hacking the terminal devices simultaneously, device types and/or device manufacturers of the terminal devices may be different, so that the terminal devices do not trust each other.

For example, in a payment and collection scenario, the terminal devices may include a facial recognition device, a code scanning device, a fingerprint payment device, and the like that are used for payment collection. Some of the terminal devices may belong to different manufacturers.

For another example, in a banking service scenario, the terminal devices may be a series of devices involved in performing a banking service, such as a queue ticketing kiosk, a POS terminal, a multimedia query machine, an ATM, and a foreign currency exchange machine.

The server may receive a service binding request or binding declaration from a user for the terminal devices, and then, generate private keys corresponding to the terminal devices and deliver the private keys to the terminal devices respectively. After receiving the private keys delivered by the server, the terminal devices can store the private keys locally. At least some of the private keys sent to the terminal devices are different.

In addition, the user may preset a quantity threshold. In this specification, encrypted data encrypted by using a public key cannot be decrypted by using any one private key into original target data. A target terminal device sending a service request can aggregate and decrypt the decrypted data shards when and only when a quantity of different decrypted data shards received by the target terminal device is not less than the preset quantity threshold, to obtain the original target data.

In addition, the server may perform joint calculation on the private keys, to generate an encrypted public key and store the encrypted public key locally in the server.

During actual application, when executing a service, the target terminal device may send a service request carrying service data to a server. After receiving the service request, the server may determine target data according to the service data, encrypt the target data by using the public key locally stored in the server, to obtain encrypted data, and further send the encrypted data to the target terminal device and at least some terminal devices on which service binding is performed in advance to the target terminal device.

Specifically, the target terminal device may obtain service data in response to a specified service operation, and then encrypt the service data by using the locally stored private key, to obtain encrypted service data, and generate a service request carrying the encrypted service data and send the service request to the server.

In addition, the target terminal device may separately send the service data to other terminal devices in a service binding relationship with the target terminal device has the. The terminal devices encrypt the service data by using locally stored private keys, and further send obtained encrypted service data to the server.

After receiving the encrypted service data, the server may judge whether a quantity of different encrypted service data is less than the quantity threshold. If the quantity of different encrypted service data is not less than the quantity threshold, the server may decrypt the different encrypted service data by using the locally stored public key, to obtain the original service data. Otherwise, the original service data cannot be obtained through decryption, and error information is returned.

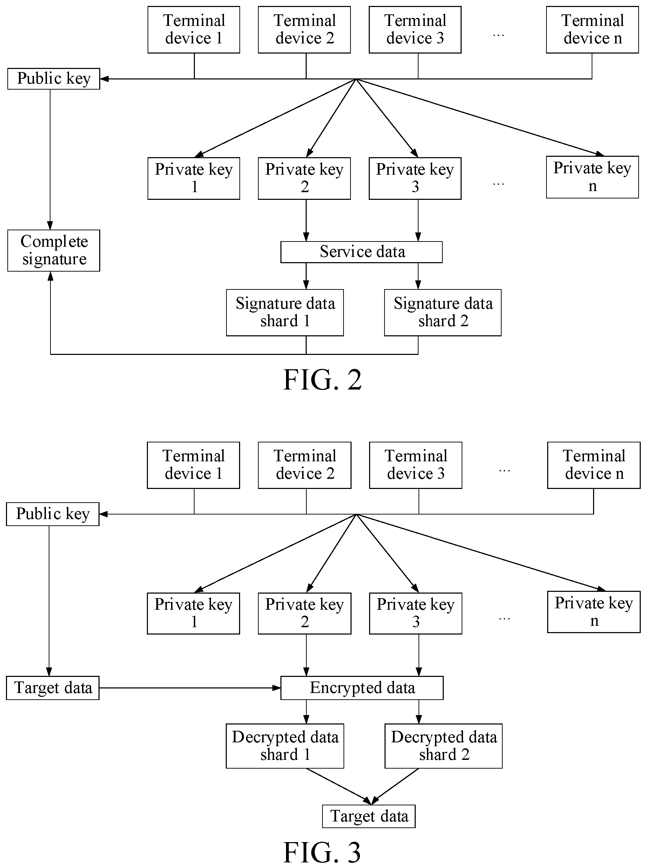

It should be noted that in this specification, the public key stored in the server may correspond to the private keys of the target terminal device and the terminal devices in a service binding relationship with the target terminal device. The terminal devices may implement data encryption by signing service data by using the private keys, and each piece of encrypted service data corresponds to one signature data shard. After obtaining more than a preset quantity of signature data shards, the server can calculate a complete data signature, to determine the service data and complete signature verification. Because there are correspondences between the public key of the server and the private keys of the terminal devices, verification can also be performed on the data signature while the encrypted service data is decrypted, to determine a data source of the service data. For ease of understanding, this specification provides a schematic diagram of a signature verification process, as shown in FIG. 2.

FIG. 2 is a schematic diagram of a signature verification process according to this specification.

In the figure, n terminal devices agree on a quantity threshold t, and obtain respective private keys x. A server jointly calculates and publishes a data signature verification public key. The terminal devices generate signature data shards for data m by using private key shards x. The server merges the signature data shards, and a complete signature can be generated only when there are no fewer than t signature data shards. The server then performs verification on a signature of the data m by using the public key.

In a payment and collection scenario, the service data may be facial data collected by a facial recognition device. The facial recognition device may send the facial data to the other terminal devices, and the facial data is separately encrypted by using private keys. After receiving a facial recognition request and decrypting the facial data by using a public key, the server may further perform recognition on the facial data, to obtain a facial recognition result and determine payment data, and further encrypt the payment data by using the public key and send encrypted payment data to the terminal devices.

In a bank credit service scenario, the service data may be a user list obtained by an identity recognition device. The identity recognition device may separately send facial data to other terminal devices, and the facial data is separately encrypted by using private keys. After receiving a service request and obtaining the user list through decryption by using a public key, the server may further obtain credit report data corresponding to the user, and further encrypt the credit report data by using the public key and send encrypted credit report data to the terminal devices.

S102: Decrypt the encrypted data by using a locally stored private key after obtaining the encrypted data, to obtain a decrypted data shard, and receive decrypted data shards sent by the at least some terminal devices, where the decrypted data shards sent by the at least some terminal devices are obtained by the at least some terminal devices after decrypting the encrypted data by using locally stored private keys.

After receiving the encrypted data sent by the server, the target terminal device and the other terminal devices in a service binding relationship with the target terminal device may initially decrypt the encrypted data by using respective locally stored private keys, to obtain decrypted data shards obtained by the terminal devices preliminarily decrypting the encrypted data by using the locally stored private keys.

S104: Judge whether a quantity of obtained different decrypted data shards is less than a preset quantity threshold.

S106: If the quantity of the obtained different decrypted data shards is not less than the preset quantity threshold, determine the target data according to the obtained decrypted data shards, and perform service processing according to the target data.

The other terminal devices in a service binding relationship with the target terminal device may send the decrypted data shards obtained through decryption to the target terminal device. After receiving the decrypted data shards, the target terminal device may determine the quantity of different decrypted data shards that are in the received decrypted data shards and all the decrypted data shards obtained by decrypting the encrypted data by using the private key stored in the target terminal device.

If the quantity of different decrypted data shards is greater than or equal to the preset quantity threshold, the target terminal device may aggregate and decrypt the different decrypted data shards, to obtain the target data. Otherwise, the target data cannot be obtained through decryption according to the decrypted data shards.

After obtaining the target data, the terminal device may perform a corresponding service (such as a collection service or a bank credit reporting service) based on the target data.

It should be noted that the quantity threshold in this specification may be less than a total quantity of terminal devices. In this way, even if some terminal devices are offline or faulty, the target data may be obtained through decryption based on the decrypted data shards sent by the remaining terminal devices. For ease of understanding, this specification provides a schematic diagram of a decryption process by using a private key, as shown in FIG. 3.

FIG. 3 is a schematic diagram of a decryption process by using a private key according to this specification.

In the figure, n terminal devices agree on a quantity threshold t and obtain respective private keys. A server jointly calculates and publishes a data encryption public key. The server then encrypts plaintext m of target data by using the public key, to generate encrypted data. Terminal devices decrypt the encrypted data by using respective private keys, to generate decrypted data shards. The target terminal device aggregates the decrypted data shards, and can complete aggregation and decryption only after not fewer than t different decrypted data shards are obtained, to obtain the plaintext m of the target data.

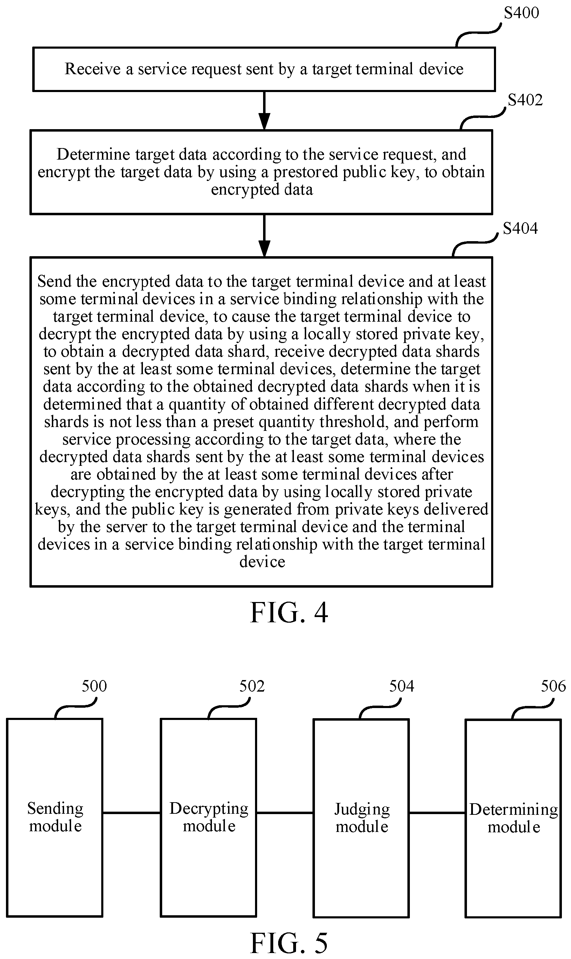

The service processing method provided in this specification is described above from a respective of a target terminal device. The service processing method provided in this specification is described below from a perspective of a server, as shown in FIG. 4.

FIG. 4 is a schematic diagram of a service processing method according to this specification, including the following steps.

S400: Receive a service request sent by a target terminal device.

S402: Determine target data according to the service request, and encrypt the target data by using a prestored public key, to obtain encrypted data.

S404: Send the encrypted data to the target terminal device and at least some terminal devices in a service binding relationship with the target terminal device, to cause the target terminal device to decrypt the encrypted data by using a locally stored private key, to obtain a decrypted data shard, receive decrypted data shards sent by the at least some terminal devices, determine the target data according to the obtained decrypted data shards when it is determined that a quantity of obtained different decrypted data shards is not less than a preset quantity threshold, and perform service processing according to the target data, where the decrypted data shards sent by the at least some terminal devices are obtained by the at least some terminal devices after decrypting the encrypted data by using locally stored private keys, and the public key is generated from private keys delivered by the server to the target terminal device and the terminal devices in a service binding relationship with the target terminal device.

When executing a service, the target terminal device may send a service request to the server. After receiving the service request, the server determines target data according to service data, encrypts the target data by using the public key locally stored in the server, to obtain encrypted data, and further sends the encrypted data to the target terminal device and the terminal devices on which service binding is performed in advance to the target terminal device.

After receiving the encrypted data sent by the server, the target terminal device and the other terminal devices in a service binding relationship with the target terminal device may initially decrypt the encrypted data by using respective locally stored private keys, to obtain decrypted data shards obtained by the terminal devices preliminarily decrypting the encrypted data by using the locally stored private keys.

If the quantity of different decrypted data shards is greater than or equal to the preset quantity threshold, the target terminal device may aggregate and decrypt the different decrypted data shards, to obtain the target data.

It can be seen from the foregoing method that, in this solution, a server simultaneously sends encrypted data to a plurality of terminal devices, and the terminal devices respectively decrypt the encrypted data by using locally stored private keys, and send decrypted data shards to a target terminal device, so that the target terminal device obtains target data. Compared with an existing method in which a private key is stored in one terminal device, in this solution, private keys may be respectively stored in a plurality of terminal devices. In this way, even if a private key in one terminal device is leaked, original data cannot be decrypted based on the private key, thereby effectively preventing a risk caused by private key leakage, and further ensuring privacy and property security of users.

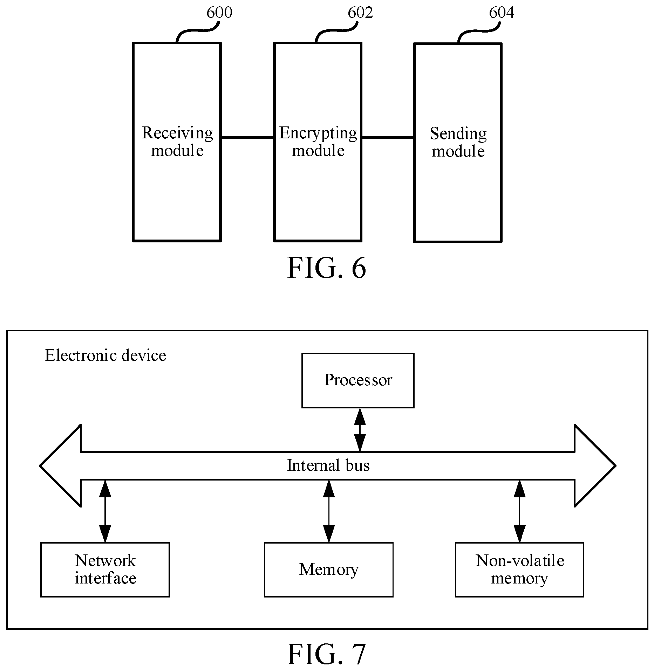

The foregoing describes implementation of one or more service processing methods in this specification. Based on the same idea, this specification further provides a corresponding service processing apparatus, as shown in FIG. 5 or FIG. 6.

FIG. 5 is a schematic diagram of a service processing apparatus according to this specification, including the following modules.

A sending module 500 is configured to send a service request to a server, to cause the server to determine target data according to the service request and encrypt the target data by using a prestored public key, to send encrypted data obtained through encryption to the target terminal device and at least some terminal devices in a service binding relationship with the target terminal device, where the public key is generated from private keys delivered by the server to the target terminal device and the terminal devices in a service binding relationship with the target terminal device.

A decrypting module 502 is configured to decrypt the encrypted data by using a locally stored private key after obtaining the encrypted data, to obtain a decrypted data shard, and receive decrypted data shards sent by the at least some terminal devices, where the decrypted data shards sent by the at least some terminal devices are obtained by the at least some terminal devices after decrypting the encrypted data by using locally stored private keys.

A judging module 504 is configured to judge whether a quantity of obtained different decrypted data shards is less than a preset quantity threshold.

A determining module 506 is configured to determine, if the quantity of the obtained different decrypted data shards is not less than the preset quantity threshold, the target data according to the obtained decrypted data shards, and perform service processing according to the target data.

Optionally, device types and/or manufacturers of the target terminal device and the at least some terminal devices in a service binding relationship with the target terminal device are not completely the same.

Optionally, the sending module 500 is specifically configured to: obtain service data in response to a specified service operation; encrypt the service data by using the locally stored private key, to obtain encrypted service data, and send the service data to the terminal devices in a service binding relationship with the target terminal device, to cause the terminal devices in a service binding relationship with the target terminal device to encrypt the service data by using the locally stored private keys; and generate a service request carrying the encrypted service data, and send the service request to the server, to cause the server to determine the service data according to the encrypted service data sent by the target terminal device and encrypted service data sent by the terminal devices in a service binding relationship with the target terminal device and determine the target data according to the service data.

FIG. 6 is a schematic diagram of a service processing apparatus according to this specification, including the following modules.

A receiving module 600 is configured to receive a service request sent by a target terminal device.

An encrypting module 602 is configured to determine target data according to the service request, and encrypt the target data by using a prestored public key, to obtain encrypted data.

A sending module 604 is configured to send the encrypted data to the target terminal device and at least some terminal devices in a service binding relationship with the target terminal device, to cause the target terminal device to decrypt the encrypted data by using a locally stored private key, to obtain a decrypted data shard, receive decrypted data shards sent by the at least some terminal devices, determine the target data according to the obtained decrypted data shards when it is determined that a quantity of obtained different decrypted data shards is not less than a preset quantity threshold, and perform service processing according to the target data, where the decrypted data shards sent by the at least some terminal devices are obtained by the at least some terminal devices after decrypting the encrypted data by using locally stored private keys, and the public key is generated from private keys delivered by the server to the target terminal device and the terminal devices in a service binding relationship with the target terminal device.

Optionally, the receiving module 600 is specifically configured to: receive a service request carrying encrypted service data sent by the target terminal device, and receive encrypted service data sent by the terminal devices in a service binding relationship with the target terminal device, where the encrypted service data carried in the service request is obtained by the target terminal device encrypting the service data by using the locally stored private key, and the encrypted service data sent by the terminal devices in a service binding relationship with the target terminal device is obtained by the terminal devices in a service binding relationship with the target terminal device encrypting the service data by using the locally stored private keys, the service data in the target terminal device is obtained by the target terminal device in response to a specified service operation, and service data in the terminal devices in a service binding relationship with the target terminal device is sent by the target terminal device; judge whether a quantity of obtained different encrypted service data is less than a preset quantity threshold; and if the quantity of the obtained different encrypted service data is not less than the preset quantity threshold, determine the service data according to the obtained encrypted service data, and determine the target data according to the service data.

This specification further provides a computer-readable storage medium, storing a computer program, where the computer program may be configured to perform a service processing method provided in FIG. 1.

This specification further provides a schematic structural diagram of an electronic device corresponding to FIG. 1 or FIG. 4, as shown in FIG. 7. As illustrated in FIG. 7, at a hardware level, the electronic device includes a processor, an internal bus, a network interface, a memory, and a non-volatile memory, and certainly, may further include hardware required for other services. The processor reads a corresponding computer program from the non-volatile memory into the memory, and runs the computer program, to implement the service processing method illustrated in FIG. 1 or FIG. 4. Certainly, in addition to software implementation, this specification does not exclude other implementations such as logic devices or a combination of software and hardware. In other words, the following processing procedures are not limited to being executed by logic units, but may alternatively be executed by hardware or logic devices.

In the 1990s, improvements to a technology can be clearly divided into hardware improvements (for example, improvements to circuit structures such as diodes, transistors, and switches) or software improvements (improvements to method procedures). However, with the development of technology, at present, improvements to many method procedures can be considered as direct improvements to hardware circuit structures. Designers almost all program an improved method procedure to a hardware circuit, to obtain a corresponding hardware circuit structure. Therefore, it does not mean that the improvement to a method procedure cannot be achieved using hardware entity modules. For example, a programmable logic device (PLD) (such as a field programmable gate array (FPGA)), is such an integrated circuit whose logic function is determined by a user programming the device. The designers perform voluntary programming to "integrate" a digital system into a single PLD without requiring a chip manufacturer to design and prepare a dedicated integrated circuit chip. Moreover, nowadays, instead of manually making integrated circuit chips, this type of programming is mostly implemented using "logic compiler" software, which is similar to software compiler used during development and writing of programs. Original code before compilation also needs to be written in a specific programming language, which is referred to as hardware description language (HDL). There is not only one type of HDL, but many types of HDLs, such as Advanced Boolean Expression Language (ABEL), Altera Hardware Description Language (AHDL), Confluence, Cornell University Programming Language (CUPL), HDCal, Java Hardware Description Language (JHDL), Lava, Lola, MyHDL, PALASM, and Ruby Hardware Description Language (RHDL). The most commonly used languages are Very-High-Speed Integrated Circuit Hardware Description Language (VHDL) and Verilog. A person skilled in the art should also be aware that it is easy to obtain a hardware circuit that implements the logic method procedures by simply performing some logic programming on the method procedures by using the foregoing hardware description languages and performing programming into an integrated circuit.

A controller can be implemented in any suitable manner. For example, the controller may be in a form of a microprocessor or processor and a computer-readable medium storing computer-readable program code (such as software or firmware) that can be executed by the (micro)processor, a logic gate, a switch, an application-specific integrated circuit (ASIC), a programmable logic controller, and an embedded microcontroller. Examples of the controller include, but are not limited to, the following microcontrollers: ARC 625D, Atmel AT91SAM, Microchip PIC18F26K20, and Silicone Labs C8051F320. A memory controller may also be implemented as a part of control logic of the memory. A person skilled in the art is also aware that in addition to implementing the controller by using pure computer-readable program code, method steps may be logically programmed to enable the controller to implement a same function in a form of a logic gate, a switch, an application-specific integrated circuit, a programmable logic controller, an embedded microcontroller, or the like. Therefore, the controller may be considered as a hardware component, and an apparatus for implementing various functions included in the controller may also be considered as a structure in the hardware component. Alternatively, the apparatus for implementing various functions may be even considered as a software module for implementing the method and a structure in a hardware component.

The system, the apparatus, the module, or the unit described in the foregoing embodiments may be specifically implemented by a computer chip or an entity, or implemented by a product having a specific function. A typical implementation device is a computer. Specifically, the computer may be, for example, a personal computer, a laptop computer, a cellular phone, a camera phone, a smartphone, a personal digital assistant, a media player, a navigation device, an email device, a game console, a tablet computer, a wearable device, or a combination of any of the devices.

For convenience of description, the foregoing apparatuses are described in separate units according to functions. Certainly, during implementation of this specification, the functions of the units may be implemented in the same piece of or a plurality of pieces of software and/or hardware.

A person skilled in the art should understand that the embodiments of this specification may be provided a method, a system, or a computer program product. Therefore, this specification may be in a form of an entirely hardware embodiment, an entirely software embodiment, or an embodiment combining software and hardware aspects. In addition, this specification may be in a form of a computer program product implemented in one or more computer-usable storage media (including, but not limited to, disk storage, a CD-ROM, optical storage, and the like) including computer-usable program codes.

This specification is described with reference to the flowcharts and/or block diagrams of the methods, the devices (systems), and the computer program products according to the embodiments of this specification. It should be understood that computer program instructions can implement each process and/or block in the flowcharts and/or block diagrams and a combination of processes and/or blocks in the flowcharts and/or block diagrams. These computer program instructions may be provided for a universal computer, a dedicated computer, an embedded processor, or a processor of another programmable data processing device to generate a machine, so that an apparatus configured to realize functions specified in one or more processes in the flowcharts and/or one or more blocks in the block diagrams through the instructions executed through the computer or the processor of another programmable data processing device.

These computer program instructions may alternatively be stored in a computer-readable memory that can instruct the computer or another programmable data processing device to work in a specific manner, so that the instructions stored in the computer-readable memory generate an artifact that includes an instruction apparatus. The instruction apparatus realizes a function specified in one or more processes in the flowcharts and/or in one or more blocks in the block diagrams.

These computer program instructions may alternatively be loaded onto a computer or another programmable data processing device, so that a series of operation steps are performed on the computer or the another programmable device to generate computer-implemented processing. Therefore, the instructions executed on the computer or the another programmable device provide steps for implementing functions specified in one or more processes in the flowcharts and/or one or more blocks in the block diagrams.

In a typical configuration, a computing device includes one or more processors (CPUs), an input/output interface, a network interface, and a memory.

The memory may include forms such as a non-persistent storage, a random-access memory (RAM), and/or a non-volatile memory in a computer-readable medium, for example, a read-only memory (ROM) or a flash memory (flash RAM). The memory is an example of the computer-readable medium.

The computer-readable medium includes both persistent and non-persistent, and removable and non-removable media. Information storage may be implemented by using any method or technology. The information may be computer-readable instructions, a data structure, a module of a program, or other data. Examples of a computer storage medium include, but are not limited to, a phase-change memory (PRAM), a static random access memory (SRAM), a dynamic random access memory (DRAM), another type of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette tape, a magnetic tape, a magnetic disk storage or other magnetic storage device, or any other non-transmission medium, which may be configured to store information accessible by a computing device. According to limitations of this specification, the computer-readable medium does not include transitory computer-readable media (transitory media), for example, a modulated data signal and a carrier.

It should further be noted that the terms "include", "comprise", or any other variants thereof are intended to cover a non-exclusive inclusion, so that a process, a method, a product, or a device including a series of elements not only includes such elements, but also includes other elements not expressly listed, or further includes elements inherent to such a process, method, product, or device. Unless otherwise specified, an element limited by "include a/an..." does not exclude other same elements existing in the process, the method, the article, or the device that includes the element.

A person skilled in the art should understand that the embodiments of this specification may be provided as a method, a system, or a computer program product. Therefore, this specification may be in a form of hardware-only embodiments, software-only embodiments, or embodiments with a combination of software and hardware. In addition, this specification may be in a form of a computer program product implemented in one or more computer-usable storage media (including, but not limited to, disk storage, a CD-ROM, optical storage, and the like) including computer-usable program codes.

This specification may be described in the general context of computer-executable instructions executed by a computer, for example, program modules. Generally, the program module includes a routine, a program, an object, a component, a data structure, or the like that executes a specific task or implements a specific abstract data type. This specification may also be implemented in a distributed computing environment in which tasks are performed by remote processing devices connected by using a communication network. In a distributed computing environment, the program module may be located in local and remote computer storage media including storage devices.

The embodiments of this specification are all described in a progressive manner. Mutual reference may be made for the same or similar parts in the embodiments. Each embodiment focuses on a difference from other embodiments. Especially, a system embodiment is basically similar to a method embodiment, and therefore is described briefly. For related parts, reference may be made to partial descriptions in the method embodiment.

The above descriptions are merely embodiments of this specification and are not used to limit this specification. For a person skilled in the art, this specification may have various modifications and changes. Any modifications, equivalent substitutions, and improvements made within the spirit and principle of this specification shall fall within the scope of the claims of this specification.

## Claims

1. A service processing method, applied to a target terminal device, comprising:
sending, by the target terminal device, a service request to a server, to cause the server to determine target data according to the service request and encrypt the target data by using a prestored public key, to send encrypted data obtained through encryption to the target terminal device and at least some terminal devices in a service binding relationship with the target terminal device, wherein the public key is generated from private keys delivered by the server to the target terminal device and the terminal devices in a service binding relationship with the target terminal device;
decrypting the encrypted data by using a locally stored private key after obtaining the encrypted data, to obtain a decrypted data shard, and receiving decrypted data shards sent by the at least some terminal devices, wherein the decrypted data shards sent by the at least some terminal devices are obtained by the at least some terminal devices after decrypting the encrypted data by using locally stored private keys;
judging whether a quantity of obtained different decrypted data shards is less than a preset quantity threshold; and
if the quantity of the obtained different decrypted data shards is not less than the preset quantity threshold, determining the target data according to the obtained decrypted data shards, and performing service processing according to the target data.

2. The method according to claim 1, wherein device types and/or manufacturers of the target terminal device and the at least some terminal devices in a service binding relationship with the target terminal device are not completely the same.

3. The method according to claim 1, wherein the sending, by the target terminal device, a service request to a server, to cause the server to determine target data according to the service request specifically comprises:
obtaining, by the target terminal device, service data in response to a specified service operation;
encrypting the service data by using the locally stored private key, to obtain encrypted service data, and sending the service data to the terminal devices in a service binding relationship with the target terminal device, to cause the terminal devices in a service binding relationship with the target terminal device to encrypt the service data by using the locally stored private keys; and
generating a service request carrying the encrypted service data, and sending the service request to the server, to cause the server to determine the service data according to the encrypted service data sent by the target terminal device and encrypted service data sent by the terminal devices in a service binding relationship with the target terminal device and determine the target data according to the service data.

4. A service processing method, applied to a server, comprising:
receiving a service request sent by a target terminal device;
determining target data according to the service request, and encrypting the target data by using a prestored public key, to obtain encrypted data; and
sending the encrypted data to the target terminal device and at least some terminal devices in a service binding relationship with the target terminal device, to cause the target terminal device to decrypt the encrypted data by using a locally stored private key, to obtain a decrypted data shard, receiving decrypted data shards sent by the at least some terminal devices, determining the target data according to the obtained decrypted data shards when it is determined that a quantity of obtained different decrypted data shards is not less than a preset quantity threshold, and performing service processing according to the target data, wherein the decrypted data shards sent by the at least some terminal devices are obtained by the at least some terminal devices after decrypting the encrypted data by using locally stored private keys, and the public key is generated from private keys delivered by the server to the target terminal device and the terminal devices in a service binding relationship with the target terminal device.

5. The method according to claim 4, wherein the receiving a service request sent by a target terminal device specifically comprises:
receiving a service request carrying encrypted service data sent by the target terminal device, and receiving encrypted service data sent by the terminal devices in a service binding relationship with the target terminal device, wherein the encrypted service data carried in the service request is obtained by the target terminal device encrypting the service data by using the locally stored private key, and the encrypted service data sent by the terminal devices in a service binding relationship with the target terminal device is obtained by the terminal devices in a service binding relationship with the target terminal device encrypting the service data by using the locally stored private keys, the service data in the target terminal device is obtained by the target terminal device in response to a specified service operation, and service data in the terminal devices in a service binding relationship with the target terminal device is sent by the target terminal device;
judging whether a quantity of obtained different encrypted service data is less than a preset quantity threshold; and
if the quantity of the obtained different encrypted service data is not less than the preset quantity threshold, determining the service data according to the obtained encrypted service data, and determining the target data according to the service data.

6. A service processing apparatus, comprising:
a sending module, configured to send a service request to a server, to cause the server to determine target data according to the service request and encrypt the target data by using a prestored public key, to send encrypted data obtained through encryption to the target terminal device and at least some terminal devices in a service binding relationship with the target terminal device, wherein the public key is generated from private keys delivered by the server to the target terminal device and the terminal devices in a service binding relationship with the target terminal device;
a decrypting module, configured to decrypt the encrypted data by using a locally stored private key after obtaining the encrypted data, to obtain a decrypted data shard, and receive decrypted data shards sent by the at least some terminal devices, wherein the decrypted data shards sent by the at least some terminal devices are obtained by the at least some terminal devices after decrypting the encrypted data by using locally stored private keys;
a judging module, configured to judge whether a quantity of obtained different decrypted data shards is less than a preset quantity threshold; and
a determining module, configured to determine, if the quantity of the obtained different decrypted data shards is not less than the preset quantity threshold, the target data according to the obtained decrypted data shards, and perform service processing according to the target data.

7. The service processing apparatus according to claim 6, wherein device types and/or manufacturers of the target terminal device and the at least some terminal devices in a service binding relationship with the target terminal device are not completely the same.

8. The service processing apparatus according to claim 6, wherein the sending module is specifically configured to: obtain service data in response to a specified service operation; encrypt the service data by using the locally stored private key, to obtain encrypted service data, and send the service data to the terminal devices in a service binding relationship with the target terminal device, to cause the terminal devices in a service binding relationship with the target terminal device to encrypt the service data by using the locally stored private keys; and generate a service request carrying the encrypted service data, and send the service request to the server, to cause the server to determine the service data according to the encrypted service data sent by the target terminal device and encrypted service data sent by the terminal devices in a service binding relationship with the target terminal device and determine the target data according to the service data.

9. A service processing apparatus, comprising:
a receiving module, configured to receive a service request sent by a target terminal device;
an encrypting module, configured to determine target data according to the service request, and encrypt the target data by using a prestored public key, to obtain encrypted data; and
a sending module, configured to: send the encrypted data to the target terminal device and at least some terminal devices in a service binding relationship with the target terminal device, to cause the target terminal device to decrypt the encrypted data by using a locally stored private key, to obtain a decrypted data shard, receive decrypted data shards sent by the at least some terminal devices, determine the target data according to the obtained decrypted data shards when it is determined that a quantity of obtained different decrypted data shards is not less than a preset quantity threshold, and perform service processing according to the target data, wherein the decrypted data shards sent by the at least some terminal devices are obtained by the at least some terminal devices after decrypting the encrypted data by using locally stored private keys, and the public key is generated from private keys delivered by the server to the target terminal device and the terminal devices in a service binding relationship with the target terminal device.

10. The service processing apparatus according to claim 9, wherein the receiving module is specifically configured to: receive a service request carrying encrypted service data sent by the target terminal device, and receive encrypted service data sent by the terminal devices in a service binding relationship with the target terminal device, wherein the encrypted service data carried in the service request is obtained by the target terminal device encrypting the service data by using the locally stored private key, and the encrypted service data sent by the terminal devices in a service binding relationship with the target terminal device is obtained by the terminal devices in a service binding relationship with the target terminal device encrypting the service data by using the locally stored private keys, the service data in the target terminal device is obtained by the target terminal device in response to a specified service operation, and service data in the terminal devices in a service binding relationship with the target terminal device is sent by the target terminal device; judge whether a quantity of obtained different encrypted service data is less than a preset quantity threshold; and if the quantity of the obtained different encrypted service data is not less than the preset quantity threshold, determine the service data according to the obtained encrypted service data, and determine the target data according to the service data.

11. A computer-readable storage medium, storing a computer program, wherein the computer program, when executed by a processor, implements the method according to any one of claims 1 to 5.

12. An electronic device, comprising a memory, a processor, and a computer program stored in the memory and executable on the processor, wherein the processor, when executing the program, implements the method according to any one of claims 1 to 5.
